# DEMANDE DE BREVET EUROPEEN

(11) **EP 0 627 869 A1**
(43) Date de publication de la demande: **07.12.1994**
(21) Numéro de dépôt: 94420162.3
(22) Date de dépôt: 03.06.1994
(51) Int. Cl.: H05B 3/74, H05B 3/08, G05D 23/24

(54) **Dispositif de chauffage et de régulation d'une table vitrocéramique**

(30) Priorité: 03.06.1993 FR 9306879; 13.09.1993 FR 9311022
(71) Demandeur: SEB S.A., F-69130 Ecully (FR)
(72) Inventeur: Thiriat, Sylvain, F-88200 Remiremont (FR); Klinger, Michel, F-68140 Stosswihr (FR); Renk, Rémi, F-88200 Remiremont (FR); Balandier, Jean-Marie, F-88400 Gerardmer (FR)

(57) **Abrégé**

- L'invention concerne un dispositif chauffant à rayonnement comportant une plaque chauffante (1) de cuisson, un corps chauffant rayonnant (10) constitué d'une part d'un bâti (11) muni d'au moins une couche isolante (12,4) thermiquement et électriquement, associée à au moins un réflecteur externe (2), et d'autre part d'éléments chauffants (13) constitués de fils résistifs (13c), ainsi que d'un capteur thermique (21) combiné à un circuit de commande et de régulation caractérisé en ce que les éléments chauffants (13) sont constitués par les fils résistifs (13c), enroulés autour de barreaux (13b), lesdits éléments chauffant étant associés à un capteur thermique (21) apte à mesurer en permanence la température dudit dispositif chauffant de manière à réaliser une régulation thermique d'ambiance en fonction d'une température de consigne fixée par l'utilisateur.
- Application aux tables vitrocéramiques posables ou encastrables.

## Description

La présente invention se rapporte au domaine technique général des tables de cuisson encastrables ou posables, à plaque chauffante et notamment à plaque vitrocéramique.

La présente invention concerne un corps chauffant rayonnant de structure particulière, comportant des éléments chauffants sous forme de barreaux, des couches métalliques et des couches isolantes et réfléchissantes sous lesdits éléments chauffants, de manière à limiter et réfléchir le rayonnement non dirigé vers la plaque chauffante. Le corps chauffant rayonnant est associé à un système de régulation qui permet à l'utilisateur d'obtenir un dosage d'énergie plus précis et une vitesse de chauffe accrue.

Dans la description qui va suivre, il sera fait référence à un dispositif de cuisson comportant un corps chauffant rayonnant, mais il est évident que l'invention ne se limite pas à ce type particulier de dispositifs. Tout dispositif destiné à chauffer, cuire, rôtir, réchauffer ou maintenir au chaud des aliments par rayonnements peut être concerné par l'objet de la présente invention.

Il a déjà été proposé dans l'art antérieur de réaliser des corps chauffants rayonnants comportant des lampes à filament de tungstène ou des lampes à halogène disposées sous une plaque vitrocéramique. Les lampes à filament de tungstène ou les lampes à halogène présentent de nombreux inconvénients, notamment leur coût. De tels dispositifs comportent également un limiteur thermique. Ce dernier est généralement constitué d'un micro-contact pilotant l'alimentation des éléments chauffants et fonctionnant par dilatation. La demande de brevet EP-0117346 décrit un tel limiteur thermique, disposé dans un tube réalisé en fibres céramiques. Le tube diminue l'influence directe des rayonnements infrarouges sur la canne de dilatation sachant que cette dernière est logée à proximité des lampes rayonnantes, sous une plaque vitrocéramique. Un autre inconvénient d'un dispositif tel que décrit dans la demande de brevet EP-0117346, est que le limiteur thermique a pour unique fonction d'empêcher une élévation en température au-delà d'un certain seuil, fixé approximativement à 700 °C sur la surface inférieure de la plaque vitrocéramique. Le limiteur thermique n'est donc pas utilisé de manière continue à des fins de régulation en température.

Le document EP-0503685, décrit plusieurs variantes de configurations d'éléments chauffants disposés dans un corps chauffant rayonnant. Les éléments chauffants sont constitués d'une lampe à infrarouge et de bobinages résistifs. Les éléments chauffants sont logés dans un corps chauffant rayonnant circulaire et épousent la forme circulaire de ce dernier. Il est bien connu dans l'art antérieur d'associer des bobinages résistifs à une lampe à infrarouge pour remplir un rôle de ballast de sécurité. L'actionnement intempestif des fusibles ou disjoncteurs de protection du circuit électrique est ainsi évité. Le bobinage résistif est en conséquence une source de chauffage d'appoint. L'inconvénient majeur des lampes à infrarouge et des bobinages résistifs de forme généralement circulaire est leur fixation par des supports adéquats dans le pot radiant, ou leur agencement sur le pot radiant. Par ailleurs, la réalisation et par conséquent le coût de tels éléments chauffants est élevé.

Les doseurs d'énergie bien connus dans l'art antérieur, fournissent une énergie donnée pendant une durée déterminée. L'apport d'énergie se fait par cycles dont l'utilisateur peut faire varier la durée suivant une énergie moyenne qu'il veut obtenir. Le limiteur thermique n'a dans ces dispositifs très répandus qu'une fonction de sécurité. Il coupe l'alimentation en courant lorsque la température sous la plaque vitrocéramique dépasse une limite d'utilisation fixée par le constructeur. La charge de la plaque vitrocéramique peut être par exemple un récipient avec un fond déformé ou un récipient de dimension très inférieure à la surface de chauffe de ladite plaque vitrocéramique. La conséquence sera une disparité importante des températures. Une régulation en température précise est impossible.

L'objet de la présente invention vise essentiellement à résoudre les problèmes évoqués précédemment et à fournir un corps chauffant rayonnant constitué d'éléments chauffants de résistance mécanique et de performances thermiques suffisantes, réalisable de manière simple et peu coûteuse.

Un autre objet de la présente invention vise à maîtriser de manière optimale la géométrie du flux thermique et en particulier à réduire le rayonnement infrarouge émis vers le bas ou latéralement par l'intermédiaire de réflecteurs.

Un autre objet de l'invention vise à fournir un dispositif qui comprend des couches isolantes réalisables avec des matériaux moins nobles. Les couches isolantes sont ainsi moins coûteuses.

Un autre objet de l'invention vise à fournir un dispositif qui assure une régulation fiable, sans considération d' une éventuelle déformation du fond de la charge disposée sur la plaque vitrocéramique.

Un autre objet de la présente invention vise à fournir à l'utilisateur un mode particulier de réduction de la surface de chauffe de la plaque vitrocéramique.

Un objet supplémentaire de la présente invention vise à fournir un dispositif chauffant à rayonnement, de structure simplifiée, peu coûteux et gardant une précision et une sécurité de fonctionnement optimales générant une durée de vie satisfaisante du dispositif.

Un objet additionnel de la présente invention est de fournir un circuit électronique mettant en oeuvre un procédé de régulation et de commande électronique qui assure une précision de fonctionnement permanente, ainsi que la mise en oeuvre des fonctions de dosage d'énergie et de limitation en température. Lesdites fonctions étant assurées par un même organe.

Les objets assignés à l'invention sont atteints à l'aide d'un dispositif chauffant à rayonnement comportant dans sa partie supérieure une plaque chauffante de cuisson destinée à supporter le fond d'un récipient de cuisson, un corps chauffant rayonnant constitué d'une part d'un bâti muni d'au moins une couche isolante thermiquement et électriquement, associée à au moins un réflecteur externe, et d'autre part d'éléments chauffants constitués de fils résistifs, ainsi que d'un capteur thermique combiné à un circuit de commande et de régulation caractérisé en ce que les éléments chauffants sont constitués par les fils résistifs, enroulés autour de barreaux, lesdits éléments chauffant étant associés à un capteur thermique intégré dans le dispositif chauffant et apte à mesurer en permanence le température dudit dispositif chauffant de manière à réaliser une régulation thermique d'ambiance en fonction d'une température de consigne fixée par l'utilisateur.

Les objets assignés à l'invention sont atteints également à l'aide d'un procédé de régulation et de commande électronique d'éléments chauffants associés à une plaque chauffante, comportant un capteur thermique destiné à contrôler l'état de chauffe des éléments chauffants caractérisé en ce qu'il consiste :
- à mesurer en permanence la température d'ambiance au voisinage des éléments chauffants, à l'aide du capteur thermique,
- à transformer en permanence le signal issu du capteur thermique en différence de potentiel électrique,
- à comparer en permanence la différence de potentiel électrique avec une valeur de référence correspondant à une tension de consigne fixée par l'utilisateur,
- à n'alimenter les éléments chauffants que si la valeur de référence correspondant à la tension de consigne est supérieure à une valeur proportionnelle à la différence de potentiel obtenue avec le signal issu du capteur thermique.

En outre les objets assignés à l'invention sont atteints à l'aide d'un circuit électronique de régulation et de commande d'éléments chauffants associés à une plaque chauffante, comportant un potentiomètre de réglage de la tension de consigne image de la température à commander, un étage d'amplification pour amplifier un signal provenant d'un capteur thermique, un étage de régulation muni d'au moins un élément de comparaison permettant de comparer la tension délivrée par l'étage d'amplification à la tension de consigne et de commander l'alimentation des éléments chauffants, un étage de coupure d'alimentation branché à la sortie de l'étage de régulation, et un étage indicateur de température résiduelle.

D'autres particularités et avantages de l'invention apparaîtront et ressortiront plus en détail à la lecture de la description faite ci-après en référence aux dessins annexés, donnés à titre d'exemples illustratifs et non limitatifs dans lesquels :
- La figure 1 représente selon une coupe transversale une vue de face d'un exemple de réalisation du dispositif conforme à l'invention.
- La figure 2 représente une vue de dessus du dispositif conforme à l'invention et représenté à la figure 1.
- La figure 3 représente une vue en coupe partielle d'un exemple de réalisation d'un élément chauffant conforme à l'invention.
- La figure 3a représente une variante de réalisation d'un élément chauffant conforme à l'invention.
- La figure 4 représente le schéma fonctionnel du procédé de régulation et de commande électronique conforme à l'invention.
- La figure 5a représente un mode de branchement électrique des éléments chauffants, conforme à l'invention.
- La figure 5b représente un autre mode de branchement électrique des éléments chauffants, conforme à l'invention.
- La figure 5c représente un autre mode de branchement électrique des éléments chauffants, conforme à l'invention.
- La figure 6 représente une variante possible du montage électronique constituant le circuit électronique de régulation et de commande conforme à l'invention.

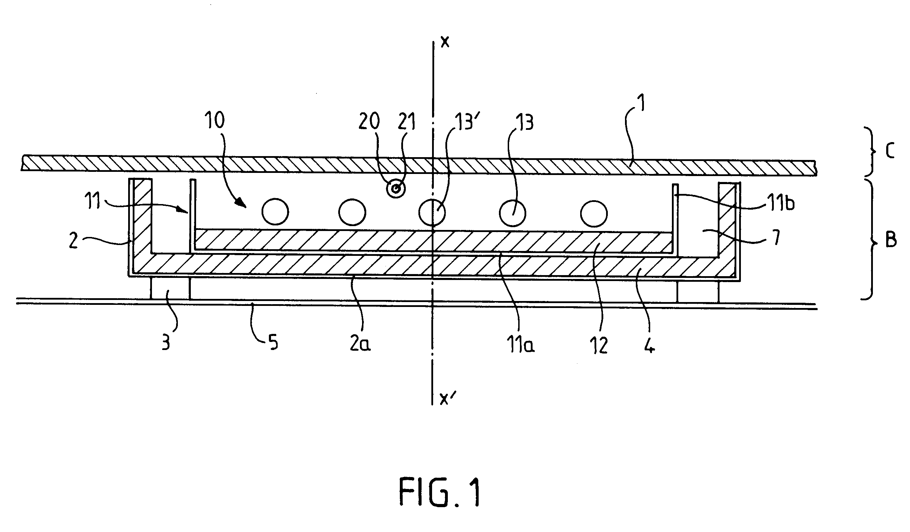

La figure 1 représente selon une vue de face, une coupe transversale du dispositif chauffant à rayonnement dans son ensemble.

Le dispositif présente une partie supérieure C ainsi qu'une partie inférieure B. La partie supérieure C comporte une plaque vitrocéramique 1 qui repose sur la partie inférieure B. Cette dernière comprend un réflecteur externe 2, un corps chauffant rayonnant 10 et un capot 5. Le réflecteur externe 2 est par exemple un cylindre métallique muni d'un fond 2a, de préférence en aluminium, possédant un pouvoir réflecteur important vis-à-vis des rayonnements infra-rouges. Le réflecteur externe 2 est fixé par tous moyens sur le capot 5 en polymère servant de soutien à l'ensemble du dispositif par des supports isolant électriquement et thermiquement le capot 5 du réflecteur externe 2. Ce dernier est également recouvert sur toute sa surface interne par au moins une couche 4 de matériau isolant, micro-poreux ou avantageusement choisie en fibres céramiques réfractaires.

Le corps chauffant rayonnant 10 comprend des éléments chauffants 13, un support de capteur 20 et un bâti 11 muni d'une couche isolante 12. Le bâti 11 est par exemple un cylindre muni d'une paroi 11b périphérique et d'un fond 11a, dont le diamètre est sensiblement inférieur au diamètre que présente le réflecteur externe 2, de manière à pouvoir s'emboîter dans ce dernier suivant un axe x-x'. La hauteur du bâti 11 est choisie de façon à ne pas dépasser la limite extrême supérieure que présente le réflecteur externe 2.

Le fond 11a du bâti 11 est recouvert d'au moins une couche isolante 12 par exemple microporeuse mais de préférence en fibres céramiques réfractaires possédant de bonnes propriétés isolantes et réfléchissantes. Les couches isolantes 4 et 12 recouvrent respectivement au moins partiellement les surfaces internes du réflecteur externe 2 et du bâti 11. Avantageusement, les couches isolantes 4 et 12 ont une épaisseur comprise entre 6 mm et 25 mm et de préférence 9 mm pour la couche isolante 4 et 13 mm pour la couche isolante 12. La paroi 11b et le fond 11a du bâti 11 forment un réflecteur interne, constitué d'un matériau identique ou similaire au réflecteur externe 2. Le bâti 11 et le réflecteur externe 2 ont une épaisseur comprise entre 0,05 mm et 1 mm, et de préférence 0,5 mm.

Selon une variante du dispositif conforme à l'invention, la paroi 11b est recouverte sur sa surface périphérique interne d'une couche isolante.

Le diamètre du bâti 11 est d'une valeur sensiblement inférieure au diamètre du réflecteur externe 2, de manière à ménager un espace libre annulaire 7 entre la couche isolante 4 et la face externe de la paroi 11b du bâti 11. L'espace libre annulaire 7 est de cette manière centré sur un axe x-x' du dispositif. La bâti 11 forme ainsi un réflecteur interne entouré du réflecteur externe 2, avantageusement et respectivement associés à des couches isolantes 12 et 4.

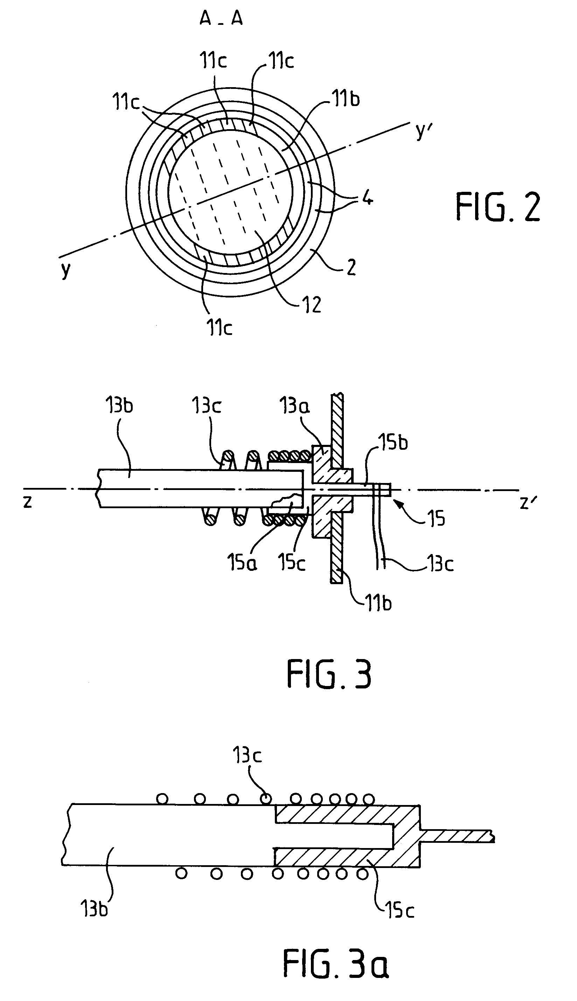

La paroi 11b présente des évidements 11c symétriques par rapport à un axe diamétral y-y' du bâti 11 et représentés à la figure 2. Les évidements 11c sont destinés à soutenir les éléments chauffants 13.

Les évidements 11c sont disposés dans un plan parallèle au plan d'extension du fond 11a, à une hauteur telle de la paroi 11b qu'il subsiste un espace libre entre la couche isolante 12 et les éléments chauffants 13 placés et maintenus dans les évidements 11c.

Selon une variante de réalisation du dispositif conforme à l'invention, les barreaux 13b sont disposés sensiblement parallèlement sous la plaque chauffante 1 et maintenus par une couche isolante 12 thermiquement et électriquement, agencée sur le bâti 11. En outre, l'espace libre entre la couche isolante 12 et les éléments chauffants 13 peut être supprimé par l'utilisation avantageuse d'un isolant microporeux pour réaliser la couche isolante 12.

Les éléments chauffants 13 comportent chacun un barreau 13b de matériau isolant électriquement et résistant à de hautes températures, un fil résistif 13c et des perles 13a. Selon un mode préférentiel de réalisation du dispositif conforme à l'invention les barreaux 13b sont de section circulaire. Les fils résistifs 13c, par exemple en alliage fer-chrome-aluminium sont bobinés sur les barreaux 13b. Le nombre de barreaux 13b est d'au moins trois. Chaque barreau 13b comporte à ses extrémités un manchon 15 en matériau conducteur électrique emboîté ou serti sur ledit barreau 13b et relié à un fil électrique 13c. Le manchon 15 comporte une partie creuse 15a, une tige circulaire 15b et une couronne 15c telles que représentées à la figure 3. La partie creuse 15a est d'une part sertie ou emboîtée sur l'extrémité du barreau 13b, et d'autre part réalise le contact électrique entre le bobinage du fil résistif 13c et le fil électrique 13a relié à l'alimentation des éléments chauffants. Les fils résistifs 13c sont fixés sur la partie creuse 15a par tout moyen et notamment par soudage. La tige circulaire 15b présente un diamètre adapté à l'encastrement de ladite tige 15b dans la perle 13a en stéatite. Cette dernière telle que représentée à la figure 3, présente une forme en T de révolution munie d'un perçage suivant l'axe de révolution z-z', correspondant également à l'axe de montage de la perle 13a sur le manchon 15. Lesdites perles ne recouvrent pas les fils résistifs 13c de manière à ne pas entraver l'échange thermique aux extrémités des barreaux 13b.

Les barreaux 13b préférentiellement droits sont disposés sensiblement parallèlement sous la plaque vitrocéramique 1 et maintenus en place par le bâti 11 du corps chauffant rayonnant 10 par l'intermédiaire du manchon 15 et des perles 13a. Ces dernières isolent électriquement les éléments chauffants 13 du bâti 11.

Les barreaux 13b sont avantageusement réalisé en stéatite, et possèdent une section circulaire, de préférence creuse. Selon une variante d'exécution du dispositif conforme à l'invention lesdits barreaux peuvent bien évidemment être pleins. Les barreaux 13b sont disposés sensiblement parallèlement sous la plaque vitrocéramique 1 et maintenus par les évidements 11c usinés dans la paroi 11b du bâti 11.

Selon une variante de réalisation conforme à l'invention et représentée à la figure 3a, les barreaux 13b présentent à leurs extrémités un diamètre inférieur au diamètre que présente la partie centrale desdits barreaux 13b. La partie creuse 15a du manchon 15 vient s'emboîter sur le barreau 13b. La partie creuse 15a présente un diamètre externe identique au diamètre que présente la partie centrale du barreau 13b. Lorsque le manchon 15 est emboîté ou encastré sur le barreau 13b, la pièce ainsi assemblée ne présente plus de décrochement au niveau de sa surface externe. De cette manière, les fils résistifs 13c sont bobinés sans jeu sur les barreaux 13b et les couronnes 15c.

Selon une variante de réalisation conforme à l'invention, les barreaux 13b sont disposés sensiblement parallèlement sous la plaque vitrocéramique 1. La couche 12, isolante thermiquement et électriquement, recouvre toute la surface interne du fond 11a et de la paroi 11b. De cette manière les barreaux 13b sont maintenus par une portion de la couche isolante 12 qui s'étend sur la surface interne de la paroi 11b périphérique. Selon une variante de réalisation conforme à l'invention, les éléments chauffants 13 sont reliés électriquement en série ou en parallèle ou en combinaison des deux modes. Lesdits éléments chauffants peuvent être alimentés indépendamment.

Selon une autre variante de réalisation conforme à l'invention, les barreaux 13b présentent une section rectangulaire ou polygonale ainsi qu'une forme incurvée ou en ligne brisée. La section desdits barreaux 13b peut avantageusement être variable.

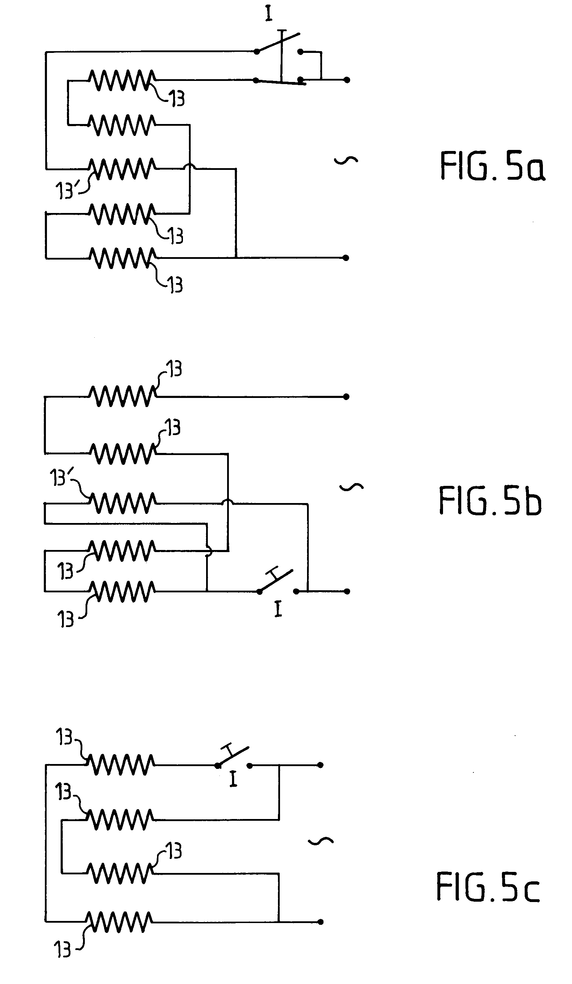

Selon un exemple de réalisation du dispositif conforme à l'invention, représenté à la figure 5a, le dispositif comprend cinq éléments chauffants 13. L'élément chauffant central 13' est commandé indépendamment des quatres autres éléments chauffants 13. Une puissance moins importante est dissipée par l'élément chauffant central 13' lorsque ce dernier est alimenté seul. Néanmoins le choix d'un élément chauffant central 13', d'un rayonnement supérieur aux éléments chauffants 13 qui l'entourent, permet de dissiper une puissance sensiblement égale à 20 % de la puissance dissipée par tous les éléments chauffants 13, sur une surface moindre de la plaque vitrocéramique 1. Ce cas de figure est adapté à l'utilisation de récipients de petite taille en tant que charge de la plaque vitrocéramique ou à l'utilisation d'une source d'alimentation en courant fournissant un courant plus faible.

Selon un autre exemple de réalisation du dispositif conforme à l'invention et représenté à la figure 5b, les éléments chauffants 13 sont branchés en série dans un circuit électrique muni d'un interrupteur I et dissipent la puissance nominale, de sorte que les quatre éléments chauffants 13 rayonnent au moins partiellement dans le spectre visible. Lorsque l'on commute le dispositif sur un mode appelé économique par l'intermédiaire de l'interrupteur I, tous les cinq éléments chauffants 13 sont branchés en série et dans ce cas la puissance dissipée est réduite de même que le courant consommé. L'élément chauffant central 13' est dimensionné de manière à rayonner plus fortement dans le visible que les quatre autres éléments chauffants 13. La surface visible de chauffe est ainsi réduite. Dans les deux cas la puissance surfacique dissipée par la surface visible de chauffe est sensiblement identique.

Selon un exemple additionnel de réalisation du dispositif conforme à l'invention et représenté à la figure 5c, les éléments chauffants 13 sont branchés en parallèle, deux par deux dans un circuit électrique muni d'un interrupteur I. L'alimentation du circuit électrique avec l'interrupteur I fermé, fait rayonner dans le spectre visible les éléments chauffants 13. Lorsque l'on commute le dispositif sur un mode économique par l'intermédiaire de l'ouverture de l'interrupteur I, seuls les éléments chauffants 13 centraux rayonnent dans le spectre visible. Dans ce dernier mode de fonctionnement le courant consommé est réduit.

Le corps chauffant rayonnant 10 comprend également un support de capteur 20. Ce dernier, réalisé en fibres céramiques réfractaires, de préférence en stéatite, est logé dans le bâti 11 au-dessus des éléments chauffants 13 dans un plan parallèle au plan d'extension de la plaque vitrocéramique 1 et s'étendant entre cette dernière et les éléments chauffants 13. Le support de capteur 20 n'entre cependant pas en contact avec la plaque vitrocéramique 1. Avantageusement le support de capteur 20 est constitué d'un tube en fibres céramiques réfractaires. La direction de l'axe de révolution du support de capteur 20 est soit perpendiculaire soit parallèle avec la direction des axes de révolution des barreaux 13b. Selon une variante d'exécution du dispositif conforme à l'invention, une orientation angulaire quelconque entre l'axe du support de capteur 20 et les axes des barreaux 13b peut être envisagée. Le support de capteur 20 est fixé dans le bâti 11 d'une manière identique aux éléments chauffants 13. Ainsi, deux évidements supplémentaires non représentés sont agencés dans la paroi 11b à un niveau supérieur aux évidements 11c.

Le dispositif comporte au moins un capteur thermique 21 assurant la régulation thermique et un boîtier non représenté aux figures contenant au moins un circuit de commande et de régulation. Ce dernier est de préférence constitué d'un circuit électronique 31. Le support de capteur 20 comporte donc au moins un capteur thermique 21 assurant la régulation thermique. Le capteur thermique 21 est constitué préférentiellement d'au moins un thermocouple. La soudure dite chaude du thermocouple est logée dans le support de capteur 20 et la soudure dite froide du thermocouple, est disposée dans le volume interne du boîtier. Le thermocouple est relié au circuit électronique 31 de commande et de régulation. La température de chauffe est ainsi régulée par l'intermédiaire d'au moins un thermocouple et d'au moins un circuit électronique 31 de régulation et de commande, en fonction d'une température fixée par l'utilisateur du dispositif. L'avantage de l'utilisation d'un capteur thermique 21 du type thermocouple par exemple, est que ce dernier, tout en étant très peu coûteux, supporte des températures très élevées. En outre un dispositif conforme à l'invention assure également l'isolation électrique du capteur thermique 21 par rapport aux éléments chauffants 13 sous tension.

Selon une variante de réalisation préférentielle du dispositif conforme à l'invention, la soudure dite froide du thermocouple n'est pas compensée.

Selon une variante d'exécution du dispositif conforme à l'invention, le capteur thermique 21 est constitué soit d'au moins un capteur du type Pt100, soit d'au moins un capteur du type CTN, CTP ou tout élément sensible à la température ou au rayonnement thermique.

Selon une variante de réalisation du dispositif conforme à l'invention, le support de capteur 20 est constitué d'un bloc de préférence cylindrique en fibres céramiques réfractaires traversant les couches isolantes 12 et 4 ainsi que le réflecteur externe 2 et le bâti 11. Le bloc cylindrique présente une partie creuse dans laquelle est logée la soudure dite chaude d'un thermocouple. Cette dernière est alors disposée sur un support isolant introduit dans le bloc cylindrique creux. Cet agencement permet de réaliser les connexions électriques d'une manière simple dans le bloc creux. La position du support de capteur 20 ainsi réalisé est sensiblement centrale sous la table vitrocéramique.

Avantageusement, une pluralité de thermocouples peuvent être utilisés, ce qui permet de répartir les soudures dites chaudes de ces derniers dans le support de capteur 20. Les soudures dites froides des différents thermocouples sont logées dans le volume interne du boîtier, contenant le circuit électronique 31 de régulation et de commande. Les liaisons électriques des soudures dites chaudes ainsi que des éléments chauffants sont réalisées dans l'espace libre annulaire 7 du dispositif. Les thermocouples branchés en parallèle mesurent ainsi une température moyenne à l'intérieur du support de capteur 20.

Un dispositif conforme à l'invention ne sera pas influencé par une température locale qui peut par exemple provenir d'une surchauffe locale. Un tel cas de figure est prévisible, notamment avec le chauffage d'un récipient dont le fond est déformé ou avec l'utilisation d'un récipient de taille réduite. L'utilisation de plusieurs thermocouples donnent une température moyenne des températures mesurées effectivement à différents endroits.

Le dispositif conforme à l'invention comprend un indicateur de température résiduelle. Ce dernier, non représenté aux figures, indique à l'utilisateur par l'intermédiaire d'un voyant lumineux que la température au niveau du support de capteur 20 et par conséquent au niveau de la plaque vitrocéramique 1 est supérieure à une limite R, fixée de préférence à 60 °C par le constructeur. Ceci permet de prévenir l'utilisateur d'un risque de brûlure. Le circuit électronique 31 de commande et de régulation pilote l'indicateur de température résiduelle.

Selon une variante d'exécution du dispositif conforme à l'invention, un thermostat pilote le voyant lumineux indicateur de température résiduelle.

Selon une variante supplémentaire du dispositif conforme à l'invention, la plaque chauffante 1 est réalisée avec des matériaux tels que le verre trempé, la fonte, l'inox ou l'acier émaillé.

Selon un mode de réalisation conforme à l'invention, le procédé de régulation et de commande électronique des éléments chauffants 13 associés à une plaque vitrocéramique 1 comporte un capteur thermique 21 destiné à contrôler l'état de chauffe des éléments chauffants 13. Le procédé consiste à utiliser un thermocouple en tant que capteur thermique 21, à mesurer de façon continue la différence de potentiel entre les soudures dites froides et chaudes d'un thermocouple, à comparer la différence de potentiel que présentent les soudures dites chaudes et froides avec une tension de consigne T fixée par l'utilisateur, à alimenter les éléments chauffants 13 que si la tension de consigne T est supérieure à une valeur proportionnelle à la différence de potentiel que présentent les soudures chaudes et froides. Le procédé consiste également à n'alimenter les éléments chauffants 13 que si la tension de consigne T est supérieure à une valeur seuil S fixée par le constructeur.

L'étape qui consiste à mesurer de façon continue la différence de potentiel aux soudures dites froide et chaude d'un thermocouple est extrêmement simple à réaliser structurellement. Les soudures chaudes n'occupant qu'un espace très limité, sont facilement intégrables dans le support de capteur 20. Par ailleurs un faible écart en température est détectable par un thermocouple, assurant ainsi une bonne précision de fonctionnement.

L'étape qui consiste à comparer le signal délivré par le thermocouple et la tension de consigne T fixée par l'utilisateur est avantageuse dans la mesure où ladite comparaison est réalisée par une polarisation particulière d'un amplificateur opérationnel d'un étage de régulation du circuit électronique 31 de commande et de régulation.

Le procédé de régulation et de commande électronique consiste également à amplifier la différence de potentiel que présentent les soudures dites chaude et froide du thermocouple. La soudure dite chaude se trouvant dans le support de capteur 20 est soumise à l'influence de l'air chaud contenu dans le support de capteur 20 et réparti autour de ce dernier ainsi qu'au rayonnement infrarouge traversant ce dernier. La soudure dite chaude est également sous l'influence de la charge de la plaque vitrocéramique 1. La différence de potentiel délivrée par le thermocouple est de l'ordre de quelques millivolts ou de plusieurs dizaines de millivolts. L'amplification de cette différence de potentiel s'avère avantageuse.

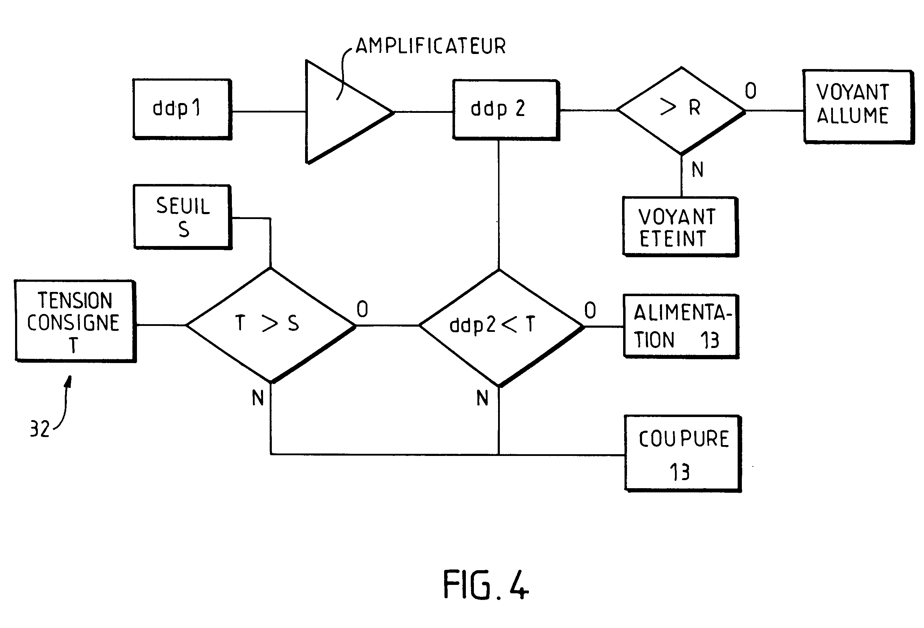

Selon un exemple de fonctionnement schématisé à la figure 4, l'amplificateur de la différence de potentiel ddp1 fournie par le thermocouple a un gain au moins égal à deux cent. La ddp1 est amplifiée en une différence de potentiel ddp2 qui alimente un voyant lumineux si cette dernière dépasse une tension limite R définie par le constructeur. Le voyant lumineux représente l'indicateur de température résiduelle. L'utilisateur fixe une tension de consigne T qui doit être supérieure à une tension seuil S fixée par le constructeur pour alimenter les éléments chauffants 13. La tension de consigne T est fixée par un potentiomètre 32, le seuil S correspond de cette façon à une course morte du potentiomètre 32. Ainsi il est inutile d'installer sur le dispositif un interrupteur marche/arrêt, tout en gardant cette fonction. Une telle fonction s'avère indispensable, car la soudure dite froide du thermocouple n'est pas compensée, dans une mise en oeuvre préférentielle du procédé conforme à l'invention. Une mise en route intempestive du dispositif risquerait de se produire lorsque les soudures dites froides et chaudes sont à des températures différentes voisines.

La tension de consigne T fixée par l'utilisateur correspond à une température de chauffe désirée. La tension de consigne T est comparée à la différence de potentiel ddp2. Si la tension de consigne T est supérieure à la différence de potentiel ddp2 ou supérieure à une valeur proportionnelle à la différence de potentiel ddp2, les éléments chauffants 13 sont alimentés. Dans le cas contraire l'alimentation des éléments chauffants 13 reste coupée. Si lesdits éléments chauffants 13 sont alimentés et si la différence de potentiel ddp2 devient supérieure ou égale à la tension de consigne T, l'alimentation des éléments chauffants 13 est coupée. La comparaison des différentes tensions ou la comparaison des valeurs proportionnelles aux tensions est entièrement déterminée par un circuit électronique 31 de commande et de régulation des éléments chauffants 13.

Le circuit électronique 31 de régulation et de commande d'éléments chauffants 13, associés à une plaque vitrocéramique 1, comporte un potentiomètre de réglage 32 de la tension de consigne T,image de la température à commander, un étage d'amplification pour amplifier un signal provenant du capteur thermique 21, un étage de régulation muni d'au moins un élément de comparaison permettant de comparer la tension délivrée par l'étage d'amplification à la tension de consigne T et de commander l'alimentation des éléments chauffants 13, un étage de coupure d'alimentation branché à la sortie de l'étage de régulation et un étage indicateur de température résiduelle.

Selon une réalisation préférentielle du circuit électronique 31, conforme à l'invention, l'élément de comparaison permettant de comparer la tension délivrée par l'étage d'amplification à la tension de consigne T, est constitué d'un amplificateur opérationnel AP3.

Selon une variante de réalisation du circuit électronique 31, conforme à l'invention, l'élément de comparaison est constitué d'un amplificateur différentiel à base de transistors ou d'un comparateur.

L'étage de régulation présente une résistance RH1 de contre-réaction branchée entre la borne de sortie et l'entrée non inverseuse de l'amplificateur opérationnel AP3, introduisant un hystérésis sur le signal de sortie dudit étage de régulation.

Le potentiomètre de réglage 32 de la tension de consigne T, image de la température à commander présente une course morte correspondant à une valeur seuil S. En deça de ladite valeur seuil S, la commande des éléments chauffants 13 est verrouillée. Aucun courant électrique ne passe dans les fils résistifs 13c.

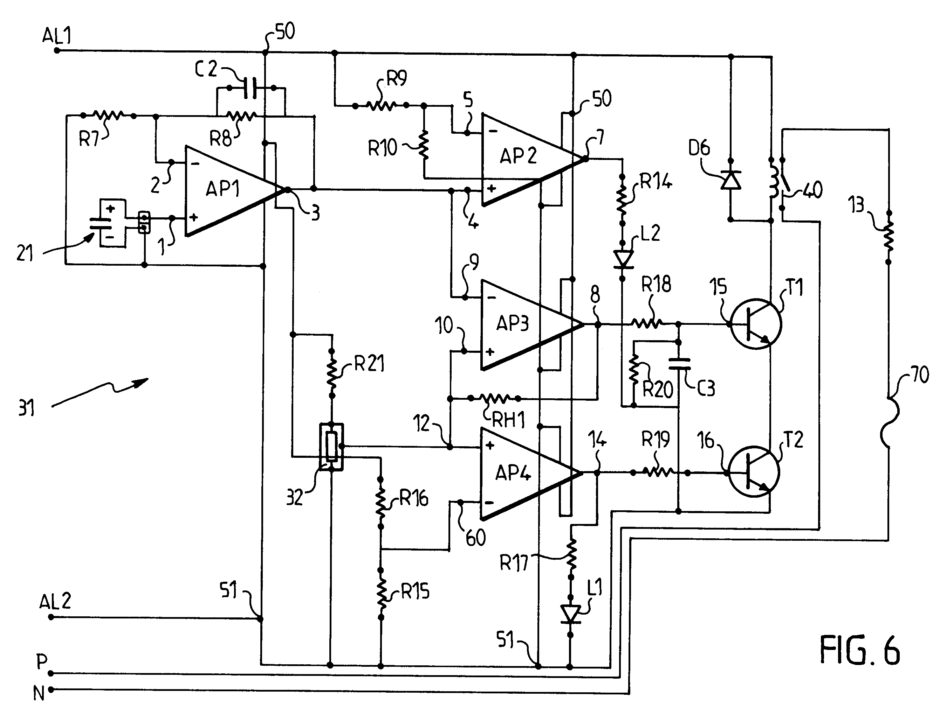

Le circuit électronique 31 tel que représenté à la figure 6, comporte un amplificateur opérationnel AP1 destiné à amplifier le signal électrique fournit par le thermocouple. Ce dernier est relié à l'entrée non inverseuse 1 de l'amplificateur opérationnel AP1. L'entrée inverseuse 2 de l'amplificateur opérationnel AP1 est reliée à une borne AL2 d'alimentation à travers une résistance R7. La sortie 3 de l'amplificateur opérationnel AP1 est reliée à l'entrée inverseuse 2 de l'amplificateur opérationnel AP1 à travers une résistance R8 en parallèle avec un condensateur C2. Le condensateur C2 permet de stabiliser par contre-réaction le signal à la sortie 3 de l'amplificateur opérationnel AP1. Ce dernier présente donc une sortie 3 reliée à la borne d'alimentation AL2 à travers des résistances R7 et R8 en série. Ces dernières permettent un réglage du gain de l'amplificateur opérationnel AP1. La sortie 3 est également reliée à l'entrée non inverseuse 4 d'un amplificateur opérationnel AP2. L'entrée inverseuse 5 de l'amplificateur opérationnel AP2 est reliée à travers une résistance R9 à une borne d'alimentation AL1 du circuit électronique 31, ainsi qu'à une borne AL2 d'alimentation à travers une résistance R10. La sortie 7 de l'amplificateur opérationnel AP2 est reliée à une borne d'alimentation AL2 symétrique de AL1, à travers une résistance R14 et une Led L2 en série. De cette manière, le constructeur peut choisir des composants du circuit électronique 31, de manière à obtenir un courant circulant dans L2, dès que et tant que le signal issu du thermocouple et amplifié par l'amplificateur opérationnel AP1 est supérieur à une valeur R correspondant à une température résiduelle de la plaque vitrocéramique 1. Le dispositif conforme à l'invention dispose ainsi d'un indicateur de température résiduelle.

Le circuit électronique 31 comporte un amplificateur opérationnel AP3 destiné à comparer en permanence la différence de potentiel que présente le thermocouple avec la tension de consigne T fixée par l'utilisateur. L'entrée non inverseuse 10 de l'amplificateur opérationnel AP3 est reliée au potentiomètre de réglage 32 de la tension de consigne T.

L'entrée inverseuse 9 de l'amplificateur opérationnel AP3 est reliée à la sortie 3 de l'amplificateur opérationnel AP1. La sortie 8 de l'amplificateur opérationnel AP3 est reliée à l'entrée non inverseuse 10 de ce même amplificateur opérationnel AP3 à travers une résistance RH1 de contre-réaction. En effet, l'amplificateur opérationnel AP1 fonctionne avec un gain important sur des signaux faibles, ce qui influence également un léger écart sur ces signaux dû au bruit électronique ou au parasitage. Ceci a pour conséquence de faire basculer un relais 40 d'alimentation des éléments chauffants 13. La résistance RH1 permet, par l'intermédiaire du retard qu'elle introduit sur le signal entrant sur l'entrée 10 de l'amplificateur opérationnel AP3, de limiter les commutations indésirables du dispositif. De cette manière la durée de vie du relais est augmentée et les critères fixés par les normes, qui limitent le nombre de commutations par unité de temps du dispositif, sont respectés.

Le circuit électronique 31 comporte un amplificateur opérationnel AP4, dont l'entrée non inverseuse 12 est reliée directement au potentiomètre 32 de réglage de la tension de consigne T. L'entrée inverseuse 60 est reliée à la borne d'alimentation AL2 à travers une résistance R15 et à la borne d'alimentation AL1 à travers une résistance R16. La sortie 14 de l'amplificateur opérationnel AP4 est reliée à la borne d'alimentation AL2 à travers une résistance R17 et une Led L1, branchés en série. La sortie 8 de l'amplificateur opérationnel AP3 est reliée à la base 15 d'un transistor bipolaire T1 à travers une résistance R18.

La sortie 14 de l'amplificateur opérationnel AP4 est reliée à la base 16 d'un transistor bipolaire T2 à travers une résistance R19. La base 15 du transistor bipolaire T1 est également connectée à la borne d'alimentation AL2 à travers une résistance R20 et un condensateur C3 en parallèle. La résistance R18 est choisie de manière à obtenir un temps de charge du condensateur C3 assez long. La décharge du condensateur C3 se fera à travers la résistance R20. De cette façon, les commutations trop fréquentes ou parasites du relais 40 sont réduites. En effet le passage de la sortie 8 d'un état haut vers un état bas ou inversement ne se transmet pas à la base 15 du transistor T1 si cela se produit à une fréquence trop élevée.

De plus la bobine du relais 40 présente une diode D6 branchée en parallèle avec ladite bobine de manière à éviter des retours de courant.

Le collecteur du transistor bipolaire T1 est relié à la borne d'alimentation AL1 à travers la bobine du relais 40. L'émetteur du transistor bipolaire T1 est connecté sur le collecteur du transistor bipolaire T2. L'émetteur de ce dernier est directement relié à la borne d'alimentation AL2. Les éléments chauffants 13 sont branchés sur le secteur entre les bornes P et N et comportent en série un fusible thermique 70 ainsi qu'un interrupteur actionné par la bobine du relais 40.

La résistance formant le potentiomètre de réglage 32 est connectée d'une part sur la borne d'alimentation AL2, et d'autre part sur la borne d'alimentation AL1 à travers une résistance R21.

L'alimentation des amplificateurs opérationnels AP1, AP2, AP3 et AP4 est réalisée par les bornes d'alimentation AL1 et AL2 aux points de connexion 50 et 51.

En ce qui concerne le fonctionnement général d'un dispositif conforme à l'invention, on pourra se référer au procédé de régulation et de commande électronique.

Selon une conception avantageuse du circuit électronique 31, représentée à la figure 6, l'indicateur de température résiduelle est matérialisé par la Led L2 allumée. En effet, un courant électrique circule entre la sortie 7 de l'amplificateur opérationnel AP2 et la borne d'alimentation AL2 si le potentiel électrique de la sortie 3 de l'amplificateur opérationnel AP1 est supérieur au potentiel de l'entrée 5 de l'amplificateur opérationnel AP2.

De la même manière la sortie 8 de l'amplificateur opérationnel AP3 est dans un état haut si le potentiel électrique de l'entrée 10 fixée par le potentiomètre 32 est supérieur au potentiel électrique de l'entrée 9.

La sortie 14 sera dans un état haut si le réglage du potentiomètre 32 dépasse un seuil S qui correspond à la tension appliquée sur l'entrée 60. En deça dudit seuil S, la sortie 14 se trouve dans un état dit bas.

Le circuit électronique comporte ainsi un potentiomètre 32 qui dispose d'une course morte.

L'état haut sur la sortie 8 bascule en un état bas dès que le signal délivré par un thermocouple augmente et applique sur l'entrée 9 un potentiel supérieur au potentiel appliqué sur l'entrée 10 par le potentiomètre 32.

Si par ailleurs la sortie 14 se trouve dans un état haut, un courant alimente la led L1, de même qu'un second courant électrique alimente la base 16 du transistor bipolaire T2. Ce dernier devient passant et de ce fait un courant peut circuler entre le collecteur et l'émetteur. Ce cas de figure correspond à une autorisation de fonctionnement. L'alimentation du relais 40 et par conséquent des éléments chauffants 13 est ainsi déverrouillée. Ladite alimentation des éléments chauffants 13 est de cette manière entièrement déterminée par l'intermédiaire du signal à la sortie 8 de l'amplificateur opérationnel AP3. Lorsque la sortie 8 se trouve dans un état haut, la base 15 du transistor bipolaire T1 est alimentée et ce dernier devient passant. Ainsi, la bobine du relais 40 est alimentée et les éléments chauffants 13 sont branchés sur le secteur.

Un des avantages d'un dispositif conforme à l'invention est une simplification de la conception même des éléments chauffants 13. Ces derniers sont constitués de fils résistifs 13c bobinés sur des supports. La longueur des fils résistifs 13c est inférieure à celle que présente les enroulements résistifs classiques sous des plaques chauffantes. Les performances thermiques sont conservées par l'intermédiaire d'un courant électrique plus important. Cette caractéristique n'altère en aucune manière la durée de vie des éléments chauffants 13, malgré l'augmentation de charge sur les fils résistifs 13c.

Un autre avantage d'un dispositif conforme à l'invention est obtenu par le logement particulier des éléments chauffants 13 dans des évidements 11c de la paroi 11b. En effet, les éléments chauffants 13 ne sont ni en contact direct avec une couche isolante, ni partiellement logés ou immergés dans une couche isolante, ce qui favorise un échange thermique homogène sur toute la longueur des fils résistifs 13C. L'apparition des zones de surchauffe est ainsi évitée. En outre, le support de capteur 20, dont l'agencement particulier permet d'une part de réaliser une régulation thermique d'ambiance à l'intérieur du dispositif chauffant et d'autre part permet d'éviter le montage d'un limiteur thermique supplémentaire sous la plaque de cuisson 1.

Un autre avantage du dispositif conforme à l'invention réside dans la simplification d'un système de régulation thermique, permettant néanmoins, à l'aide d'un capteur thermique 21 associé à un circuit électronique 31, de réaliser une régulation thermique en permanence ou en continue, en fonction d'une consigne de l'utilisateur et de réaliser simultanément un limiteur thermique.

Un autre avantage du dispositif et du procédé conforme à l'invention réside dans la réalisation d'une régulation thermique permettant de réaliser, sans l'utilisation de moyens supplémentaires, un doseur d'énergie associé à un limiteur thermique. Les fonctions identiques à des moyens de dosage d'énergie ou de cyclage d'énergie avec un rapport cyclique variable, sont réalisées avec un moyen de prise de température. L'utilisateur dispose donc de moyens simples pour contrôler la puissance moyenne fournie par les éléments chauffants 13.

Un avantage additionnel d'un dispositif conforme à l'invention réside dans la conception particulière du circuit électronique 31. Ce dernier dispose d'un potentiomètre 32 qui présente une course morte lors de son actionnement. L'intégration d'un interrupteur marche/arrêt est par conséquent inutile, tout en utilisant un ou plusieurs thermocouples sans compensation des soudures dites froides.

## Revendications

1. Dispositif chauffant à rayonnement comportant dans sa partie supérieure (c) une plaque chauffante (1) de cuisson destinée à supporter le fond d'un récipient de cuisson, un corps chauffant rayonnant (10) constitué d'une part d'un bâti (11) muni d'au moins une couche isolante (12,4) thermiquement et électriquement, associée à au moins un réflecteur externe (2), et d'autre part d'éléments chauffants (13) constitués de fils résistifs (13c), ainsi que d'un capteur thermique (21) combiné à un circuit de commande et de régulation caractérisé en ce que les éléments chauffants (13) sont constitués par les fils résistifs (13c), enroulés autour de barreaux (13b), lesdits éléments chauffant étant associés à un capteur thermique (21) intégré dans le dispositif chauffant et apte à mesurer en permanence la température dudit dispositif chauffant de manière à réaliser une régulation thermique d'ambiance en fonction d'une température de consigne fixée par l'utilisateur.

2. Dispositif selon la revendication 1 caractérisé en ce que le capteur thermique (21) est constitué d'au moins un thermocouple.

3. Dispositif selon la revendication 2 caractérisé en ce que la soudure dite chaude du thermocouple est logée dans un support de capteur (20) de préférence en stéatite et la soudure dite froide du thermocouple est disposée dans le volume interne du boîtier comportant le circuit électronique (31) de commande et de régulation.

4. Dispositif selon la revendication 3 caractérisé en ce que le support de capteur (20) est disposé dans un plan parallèle au plan d'extension de la plaque chauffante (1) et s'étendant entre cette dernière et les éléments chauffants (13).

5. Dispositif selon l'une des revendications 1 à 4 caractérisé en ce que les barreaux (13b) sont disposés sensiblement parallèlement sous la plaque chauffante (1) et maintenus par le bâti (11) du corps chauffant rayonnant (10).

6. Dispositif selon l'une des revendications 1 à 5 caractérisé en ce que les barreaux (13b) sont disposés sensiblement parallèlement sous la plaque chauffante (1) et maintenus par une couche isolante (12) thermiquement et électriquement, agencée sur le bâti (11).

7. Dispositif selon l'une des revendications 1 à 6 caractérisé en ce que les barreaux (13b) sont de préférence des barreaux en stéatite de section circulaire et de préférence creux.

8. Dispositif selon l'une des revendications 1 à 7 caractérisé en ce que le bâti (11) forme un réflecteur interne entouré d'un réflecteur externe (2).

9. Dispositif selon l'une des revendications 1 à 8 caractérisé en ce qu'il comporte au moins deux couches isolantes (4) et (12) recouvrant respectivement au moins partiellement les surfaces internes du réflecteur externe (2) et du bâti (11).

10. Dispositif selon l'une des revendications 1 à 9 caractérisé en ce que la plaque chauffante (1) est constituée d'une plaque vitrocéramique.

11. Procédé de régulation et de commande électronique d'éléments chauffants (13) associés à une plaque chauffante (1), comportant un capteur thermique (21) destiné à contrôler l'état de chauffe des éléments chauffants (13) caractérisé en ce qu'il consiste :
- à mesurer en permanence la température d'ambiance au voisinage des éléments chauffants (13), à l'aide du capteur thermique (21),
- à transformer en permanence le signal issu du capteur thermique (21) en différence de potentiel électrique,
- à comparer en permanence la différence de potentiel électrique avec une valeur de référence correspondant à une tension de consigne (T) fixée par l'utilisateur,
- à n'alimenter les éléments chauffants (13) que si la valeur de référence correspondant à la tension de consigne (T) est supérieure à une valeur proportionnelle à la différence de potentiel obtenue avec le signal issu du capteur thermique (21).

12. Procédé de régulation et de commande électronique d'éléments chauffants (13) selon la revendication 11, caractérisé en ce qu'il consiste :
- à utiliser au moins un thermocouple en tant que capteur thermique (21),
- à mesurer en permanence la différence de potentiel entre la soudure froide et la soudure chaude du thermocouple.

13. Procédé de régulation et de commande électronique d'éléments chauffants (13), selon la revendication 11 ou 12 caractérisé en ce qu'il consiste :
- à n'alimenter les éléments chauffants (13) que si la valeur de la tension de consigne (T) est supérieure à une valeur seuil (S) fixée par le constructeur.

14. Procédé de régulation et de commande électronique d'éléments chauffants (13), selon l'une des revendications 11 à 13 caractérisé en ce qu'il consiste à :
- utiliser au moins un thermocouple présentant une soudure dite froide non compensée.

15. Procédé de régulation et de commande électronique d'éléments chauffants (13), selon l'une des revendications 11 à 14 caractérisé en ce qu'il consiste :
- à amplifier, avec des moyens d'amplification, le signal électrique issu du thermocouple.

16. Circuit électronique (31) de mise en oeuvre du procédé conforme aux revendications 11 à 15 pour la régulation et la commande d'éléments chauffants (13) associés à une plaque chauffante (1), comportant un potentiomètre de réglage (32) de la tension de consigne (T), image de la température à commander, un étage d'amplification pour amplifier un signal provenant d'un capteur thermique (21), un étage de régulation muni d'au moins un élément de comparaison permettant de comparer la tension délivrée par l'étage d'amplification à la tension de consigne (T) et de commander l'alimentation des éléments chauffants (13), un étage de coupure d'alimentation branché à la sortie de l'étage de régulation et un étage indicateur de température résiduelle.

17. Circuit électronique (31) selon la revendication 16 caractérisé en ce que l'étage de régulation présente une résistance (RH1) de contre-réaction branchée entre la borne de sortie et l'entrée non inverseuse 10 d'un amplificateur opérationnel (AP3) introduisant un hystérésis sur le signal de sortie de l'étage de régulation.

18. Circuit électronique (31) selon l'une des revendications 16 à 17, caractérisé en ce que le potentiomètre de réglage (32) de la tension de consigne (T), image de la température à commander présente une course morte correspondant à une valeur seuil (S).

19. Circuit électronique (31) selon l'une des revendications 16 à 18, caractérisé en ce que l'étage d'amplification comporte un amplificateur opérationnel (AP1) dont la sortie (3) est branchée sur l'étage de régulation et sur l'étage indicateur de température résiduelle.

20. Circuit électronique (31) selon l'une des revendications 16 à 19 caractérisé en ce que l'étage de régulation comporte au moins un amplificateur opérationnel (AP3), lequel reçoit sur l'entrée inverseuse (10) et sur l'entrée non inverseuse (9), respectivement le signal du potentiomètre de réglage (32) et le signal issu de l'étage d'amplification.

21. Circuit électronique (31) selon l'une des revendications 16 à 20 caractérisé en ce que l'étage de coupure d'alimentation comporte deux transistors (T1, T2) pour commander un relais (40) pilotant l'alimentation des éléments chauffants (13).

22. Circuit électronique (31) selon l'une des revendications 16 à 21 caractérisé en ce qu'il comporte un amplificateur opérationnel (AP4) connecté sur l'étage de régulation et sur l'étage de coupure d'alimentation, ledit amplificateur opérationnel (AP4) permettant d'obtenir une valeur seuil (S) pour la tension de consigne (T) en deçà de laquelle l'alimentation des éléments chauffants (13) est coupée.
